# EUROPEAN PATENT APPLICATION

(11) **EP 1 455 513 A1**
(43) Date of publication of application: **08.09.2004**
(21) Application number: 03004671.8
(22) Date of filing: 03.03.2003
(51) Int. Cl.: H04N 1/00

(54) **Portable flash device as accessory to a mobile communication equipment**

(71) Applicant: Sony Ericsson Mobile Communications AB, 221 88 Lund (SE)
(72) Inventor: Bartsch, Andreas c/o Sony Ericsson Mobile Comm., 85609 Aschheim-Dornach (DE); Tham, Krister c/o Sony Ericsson Mobile Comm.Int., 85609 Aschheim-Dornach (DE); Marntell, Bengt c/o Sony Ericsson Mobile Comm., 85609 Aschheim-Dornach (DE)
(74) Representative: Körber, Martin, Dipl.-Phys.

(57) **Abstract**

The present invention relates to a portable flash device (1) as accessory to a mobile communication equipment (2) for a wireless communication system comprising a camera function, with input means 4 for inputting flash and camera instructions by a user, light means (3) for outputting light and control means (10) for controlling the camera function of a connected mobile communication equipment on the basis of a camera instruction input via the input means (4) and for controlling a flash light function of the light means (3) supporting the camera function.

## Description

The present invention relates to a portable flash device as accessory to a mobile communication equipment for a wireless communication system, such as a cell phone, a PDA and the like.

Mobile communication equipments, particularly cell phones with an additional camera function for taking digital pictures are getting more and more popular. Some manufacturers offer small digital cameras as accessories to mobile equipments. The present invention, however, relates to a portable flash device as accessory to a mobile communication equipment comprising a camera function. Hereby, the camera function is integrated in the mobile communication equipment. Portable flash devices as accessories for such mobile communication equipments are known. However, such portable flash devices do not have any control functions but are exclusively controlled by the mobile communication equipment.

The object of the present invention is therefore to provide a portable flash device as accessory to a mobile communication equipment for a wireless communication system comprising a camera function, which is suited to control the camera function as well as the flash light function itself.

The above object is achieved by a portable flash device as defined in claim 1. The portable flash device according to the present invention comprises input means for inputting flash and camera instructions by a user, light means for outputting light, and control means for controlling the camera function of a connected mobile communication equipment on the basis of a camera instruction input via the input means and for controlling a flash light function of the light means supporting the camera function.

The portable flash device according to the present invention thus enables the control not only of the flash light function of the portable flash device itself but also of the camera function of a connected mobile communication equipment in a simple and effective way.

Advantageously, the control means controls the flash light function of the light means for supporting the camera function of a connected mobile communication equipment on the basis of control signals received from a connected mobile equipment in a mobile equipment flash control mode or on the basis of control signals generated in the control means in a flash device flash control mode. Thus, the portable flash device according to the present invention is adapted to either control its flash light function itself or can receive control signals from a connected mobile communication equipment controlling the flash light function. The later case allows a perfect synchronisation with the camera function of the mobile communication equipment. Advantageously, when the flash device is connected to a mobile equipment, the control means is set to the mobile equipment or flash device control mode depending on a corresponding instruction received from the connected mobile communication equipment. In this way, the mobile communication equipment can indicate if it is able to control the flash light function of the flash device or not. If not, the flash device function is controlled by the control means of the portable flash device. If it is the case, the mobile communication equipment takes over the control of the flash light function.

The control means, in the mobile equipment flash control mode, advantageously activates or deactivates the flash light function of the light means upon receipt of a corresponding instruction from the mobile equipment. Hereby, the control means, in the mobile equipment flash control mode, upon receiving a camera and flash instruction input via the input means by a user, sends a camera instruction to the mobile communication equipment and, upon receiving a flash on instruction from the mobile communication equipment, activates the flash light function of the light means and, upon receiving a flash off instruction from the mobile communication equipment, deactivates the flash light function of the light means.

Advantageously, the control means, in the flash device flash control mode, activates or deactivates the flash light function of the light means on the basis of a delay time period. Thus, the light means is activated during the delay time period so that the camera function of the mobile communication equipment can be used to take a picture during this delay time period. Hereby, the control means, in the flash device flash control mode, upon receiving a camera and flash instruction input via the input means by a user, sends a camera instruction to the mobile communication equipment and generates said delay time period.

Advantageously, the control means, in a view finder mode, turns said light means on before a picture is taken. Hereby, it is facilitated for a user to view the intended object of the picture to be taken and the correct adjustment of a fixfocus or even an autofocus function can be assured.

Advantageously, the light means comprises one or more light emitting diodes. Light emitting diodes are particularly well suited for portable applications due to the low power consumption and the long life time. Also, the light intensity emitted by light emitting diodes is quite high and makes them very well suited for flash light applications. Actually, a portable flash device as accessory to a mobile communication equipment for a wireless communication system comprising a camera function without all the control functions as described above but with one or more light emitting diodes as the light means is considered to be an independent invention.

Further advantageously, the input means is an input button with a one click and double click function so that the input of different instructions is enabled. For example, one click could activate the flash light and the camera functions, whereby a double click activates a constant light output from the light means. Alternatively, the input means is a 2-step button, whereby e.g. a first half press activates the viewfinder function (or even autofocus) for the camera and a full press actually causes a picture to be taken.

The present invention is described in detail in the following description by means of a preferred embodiment in relation to the enclosed drawings, in which
Fig. 1 shows a schematic view of a portable flash device according to the present invention connected to a mobile phone as a mobile communication equipment,
Fig. 2 shows a block diagram of a portable flash device connected to a mobile communication equipment,
Fig. 3 shows a schematic diagram of instructions and actions exchanged between the user, a mobile communication equipment and a portable flash device being in a mobile equipment flash control mode,
Fig. 4 shows a schematic diagram of instructions and actions exchanged between a user, a mobile communication equipment (phone) and a portable flash device in a flash device flash control mode, and
Fig. 5 shows a schematic state diagram of a portable flash device according to the present invention.

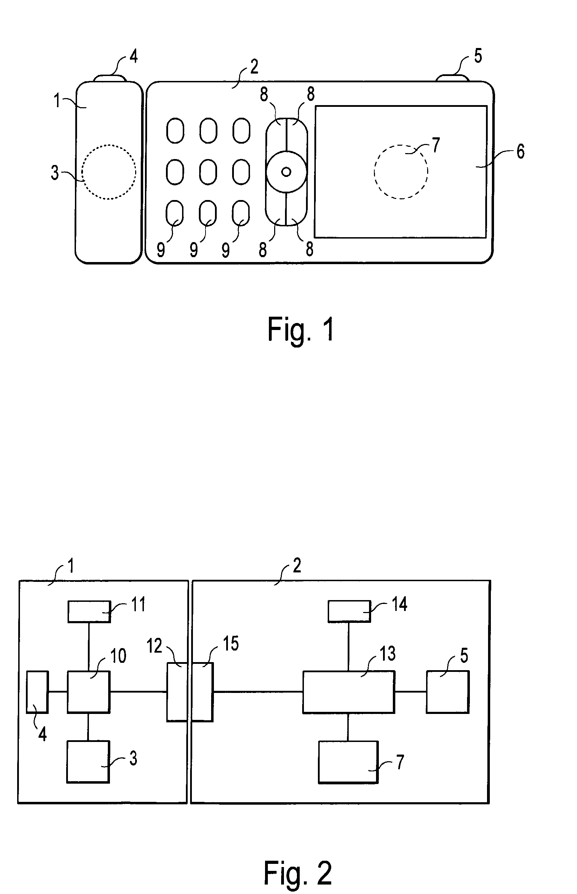

Fig. 1 shows a schematic view of a portable flash device 1 connected to a mobile terminal 2 for a wireless communication system, for example the GSM or the UMTS system. The mobile terminal 2 is only used as an example for a mobile communication equipment and could also be a PDA (Personal Digital Assistant) or any other device suited for communication in a wireless communication system and comprising a camera function.

The mobile terminal 2 comprises the usual features and elements of a mobile terminal known in the art, such as a display 6, a joy stick for scrolling up, down, left and right, number/character input keys 9 and further input keys 8 located between the number/character key 9 and the display 6. Further, a digital camera 7 is integrated in the mobile terminal, e.g. on the back side (shown in dotted lines) and enables to take digital pictures which are then processed and stored in the mobile terminal 2. Further, the mobile terminal 2 comprises a camera push button 5. After setting the mobile terminal 2 to a camera mode, a user, by pushing the camera push button 5, can take a picture with the camera 7.

The portable flash device 1 according to the present invention is constructed as an accessory to the mobile terminal 2 and comprises a light means 3, e.g. on the back side (shown in dotted lines) for outputting light, e.g. as a flash light in order to support the camera function of the mobile terminal 2. For example, the light means 3 comprises one orseveral light emitting diodes, LEDs, which are very advantageous in view of the power consumption and light intensity. For example, the light emitting diodes are arranged in a circle. However, any other geometrical arrangement is possible. Also, other light means could be used.

Further, the portable flash device 1 comprises and input means (a flash and camera push button) 4 via which a user can input flash and/or camera instructions in order to control the flash function of the portable flash device 1 and/or the camera function of the mobile terminal 2.

Fig. 2 shows a schematic block diagram of the portable flash device 1 connected to the mobile terminal 2. The portable flash device 1 comprises a control means 10 for controlling the functions of the portable flash device particularly the flash light function of the light means 3, as well as for controlling the camera functionality of the connected mobile terminal 2. The control means 10 is connected to or comprises a memory means 11 for storing software and/or data. Further, the control means 10 is connected to the input means 4, which is the flash and camera push button. Further, the control means 10 is connected to the light means 3 for controlling its functions, particularly for switching it on or off depending on a user input via the input means 4 or depending on the instructions received from the connected mobile terminal 2. Further, the control means 10 is connected to an interface 12, such as an I/O-port connectable to a corresponding interface (I/O-port 15 of the mobile terminal 2).

The mobile terminal 2 also comprises a control means 13 which controls the functions of the mobile terminal 2, such as the baseband functionality and particularly the camera or picture taking mode relevant for the present invention. The control means 13 is connected to the interface 15 for exchanging data and/or instructions with the control means 10 of the portable flash device 1. Further, the control means 13 is connected to the camera push button 5 and the camera 7. Also, the control means 13 is connected to or comprises a memory 14. It is to be noted that the mobile terminal 2 in reality comprises all necessary elements and functions for the operation in a wireless communication system. However, only elements relevant for the explanation and the understanding of the present invention are shown and explained. The same is true for the portable flash device 1.

The portable flash device 1 is an accessory to mobile communication equipment, such as the mobile terminal 2 and acts as an external flash for the built-in camera 7 of the mobile terminal 2 in order to improve the picture quality in low light conditions. Advantageously, one or more LEDs are used as the light means 3 of the portable flash device 1. Hereby, via the flash and camera button 4 of the portable flash device 1, the user can activate the camera function of the mobile terminal 2 and take pictures with the camera 7 supported by the flash light from the light means 3. Depending on the compatibility with the mobile terminal 2, it is also possible to drive and control the portable flash device 1 from the mobile terminal 2. In addition, several features can be implemented in the portable flash device 1, such as a torch mode, stroboscope and blinking at certain events from the mobile terminal 2, such as incoming call, receiving SMS/MMS etc. To be more specific, the light means 3 can be switched on manually via the flash and camera button 4 of the portable flash device 1 or automatically under control from the control means 13 of the mobile terminal 2. In order to improve the view in the view finder mode of the mobile terminal 2, the light means 3 can be switched on (to a lower light intensity than in the picture taking mode) before the picture is taken, which can also happen manually and/or automatically under control from the control means 10 of the portable flash device 1 or with the control means 13 from the mobile terminal 2. For the light means 3, an (adjustable) reflector can be provided in order to guide and focus the light beam e.g. of the LEDs. Also, the light means can e.g. be used as a Morse source driven by the SMS editor of the mobile terminal 2. The light means 3 could be cascade coupled with other flashes.

The flash and camera button 4 of the portable flash device 1 can support a one click/double click functionality in order to enable the input of different instructions in order to avoid two or more different input buttons on the portable flash device 1. Alternatively, the button 4 can be a two-step button.

Also, the battery or accumulator of the mobile terminal 2 is used as a power supply for the portable flash device 1, which is advantageous in that the portable flash device 1 does not need its own power source.

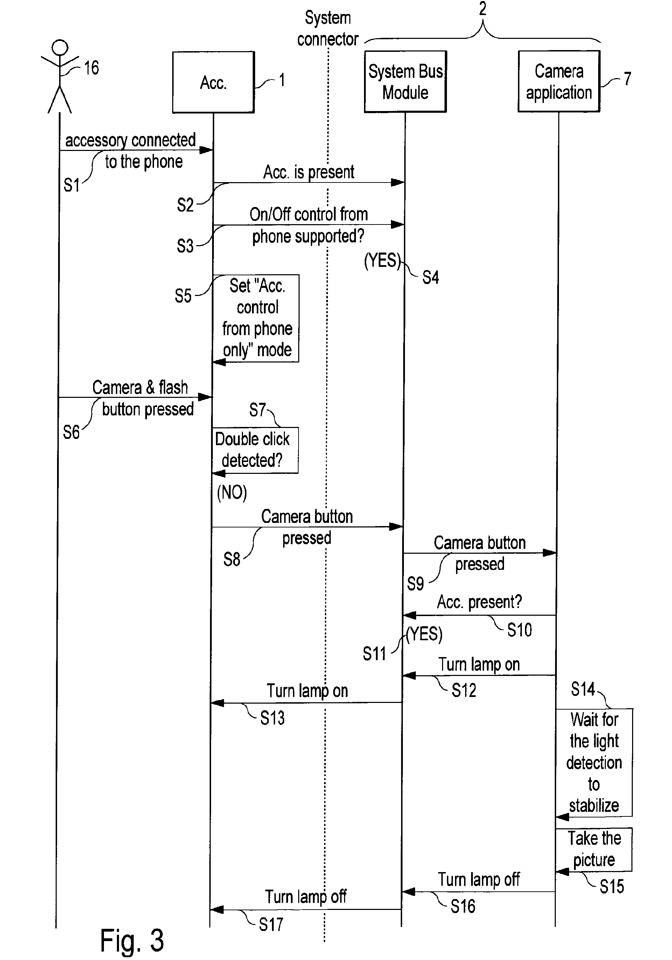

Fig. 3 shows a schematic diagram of the software interface between a user 13, the portable flash device 1 (accessory, Acc.) and the mobile terminal 2 with instructions and information exchanged between these entities.

In a first step S1 the user 16 connects the portable flash device 1 to the mobile terminal 2. In a second step S2, the control means 10 of the flash device 1 informs the control means 13 of the mobile terminal 2 via the interfaces 12 and 15 about its presence. In a third step S3, the control means 10 inquires if the mobile terminal 2 supports the on/off control of the light means 3 of the flash device 1 or not. In a fourth step S4, the control means 13 of the mobile terminal 2 informs the flash device 1 if this flash light function of the light means 3 is supported by the mobile terminal 1 or not. In the present case YES, i.e. the mobile terminal 2 supports this functionality, so that in a fifth step S5, the flash device 1 is set into a mobile communication equipment flash control mode or "accessory controlled from phone only" mode. In this mode, the control means 13 of the mobile terminal 2 controls the flash light function, i.e. the on/off switching of the light means 3 for supporting the camera function and the picture taking.

The flash device 1 now being in the mobile equipment flash control mode, receives, if the user 16 presses the input means 4, a corresponding camera/flash button pressed signal. Hereby, the control means 10 checks in a seventh step S7, if the input means 4 has been double clicked. If yes, this means that the user intends to constantly switch the light means 3 on for a while until another double click. If the input means 4 is clicked only once, the user intends to take a picture with the camera 7 of the mobile terminal 2. In the case shown in Fig. 3, the control means 10 detects only a single click and correspondingly sends, in an eighth step S8, an instruction to the control means 13 of the mobile terminal 2 that the camera button has been pressed. In a ninth step S9, the control means 13 informs the camera application which, in a tenth step S10, inquires if the flash device 1 is still present. If this is confirmed in an eleventh step S11, the camera application (which is a software programme usually being part or implemented in the control means 13) instructs the control means 10 of the flash device 1 that the light means 3 should be turned on. In the shown diagram, this instruction in a twelfth step S12 is supplied to the system bus module of the mobile terminal 2 and then in a thirteenth step S 13 to the control means 10 of the flash device 1. The control means 10 correspondingly turns the light means 3 on. At the same time, the camera application in the mobile terminal 2 starts a time period which is a waiting period for the light detection to stabilise (step S14). After the light detection stabilised, the picture is taken with the camera 7 in the next step S15. After that, the further instructions issued and supplied to the control means 10 (steps S16 and S17) to turn the light means 3 off.

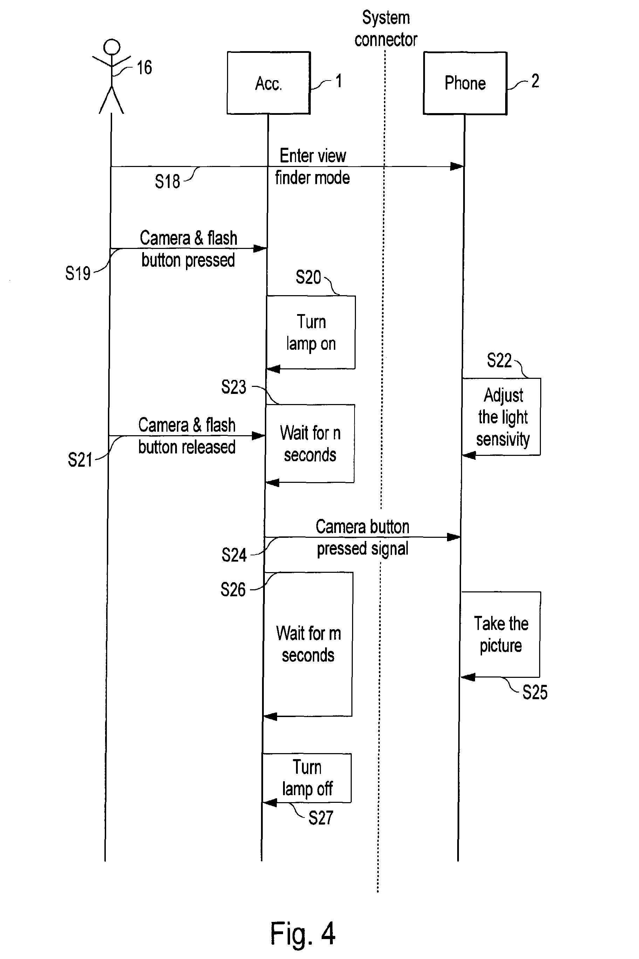

Fig. 4 shows a schematic diagram of the instructions and information exchange between the user 16, the flash device 1 and the mobile terminal 2 via the interfaces 12 and 15 for the case that the mobile terminal does not support the on/off control of the light means 3 of the flash device 1. Hereby, the steps S1, S2 and S3 as shown and explained in relation to Fig. 3 are also performed. However, the answer to the question of step S3 from the mobile terminal 2 is NO, meaning that the mobile terminal does not support the on/off control of the light means 3. This means, that the flash device 1 enters a flash device flash control mode in which the light means 3 is controlled by the control means 10 of the flash device 1 as will be explained in detail in relation to Fig. 4. It has to be added that Fig. 4 additionally contains the possibility or further option that a user, in step S18, inputs an instruction to the mobile terminal 2 to enter a view finder mode. If the user 16 now presses, in step S 19, the input means 4 of the flash device 1 in a single click (no double click), the light means 3 of the flash device 1 is turned on in step S20. At the same time, the light sensitivity is adjusted in the camera function of the mobile terminal 2 (step S22). Further, the control means 10 of the flash device 1 starts a waiting period for n seconds (n is a natural number) in step S23, while the input means 4 (camera/flash button) is released in step S21. Then, the control means 10, after the waiting period of step S23 has expired, forwards in step S24 instruction to the mobile terminal 2, that the camera button (input means 4) has been pressed. In response thereto, the control means 13 causes the camera 7 to take the requested picture in step S25. At the same time, from the time point of sending the instruction S24 to the mobile terminal 2, the control means 10 of the flash device 10 initiates another waiting period for m seconds (m is a natural number) in step S26 in order to make sure that the light means 3 stays switched on until the picture has been taken. Then, after expiration of the waiting period, the light means 3 is turned off by the control means 10 in step S27.

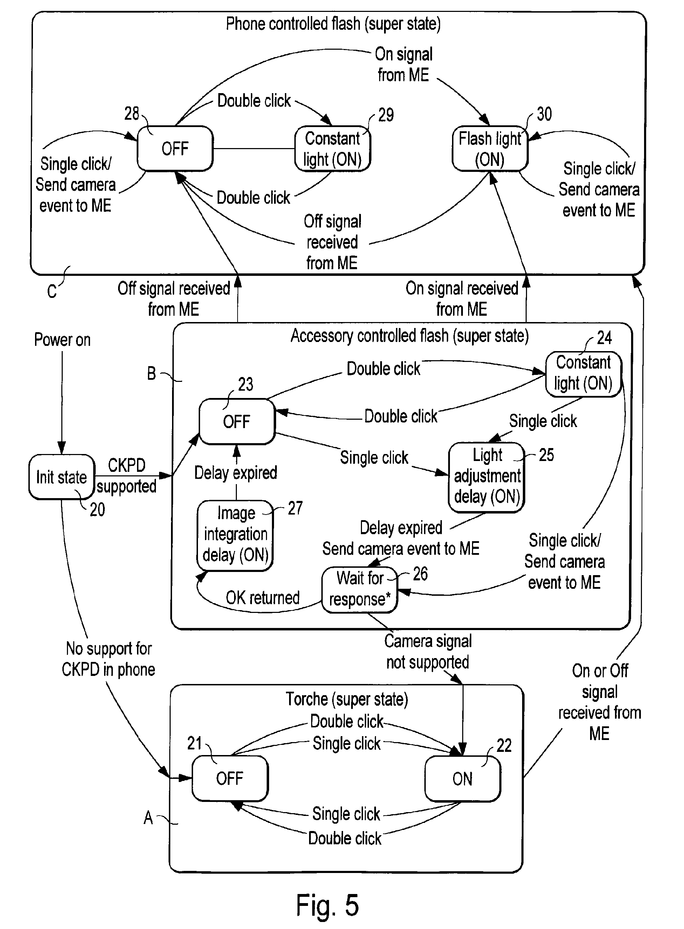

Fig. 5 schematically shows a state or mode diagram for the flash device 1 of the present invention. Generally, the flash device 1 can assume three different modes when connected to a mobile communication equipment, such as the mobile terminal 2. A first mode A is assumed if the mobile terminal 2 does not support a camera function at all. Mode B is the before mentioned flash device flash control mode in which the flash device 1 controls the light means 3. Mode C is the afore mentioned mobile equipment flash control mode in which the mobile terminal controls the flash light function of the light means 3.

Generally, after the flash device 1 is switched on (power on), it enters an initialisation state 20 in which it is detected if a camera function is supported by the connected mobile equipment or not. If not, mode A is entered. In this mode, the light means 3 of the flash device 1 can only be switched on or off by a direct input to input means 4. A single click as well as a double click on the input means 4 turns the light means 3 on and off.

If, in the initialisation state 20, it is detected that the connected mobile equipment supports and has a camera function, it is checked if the mobile equipment supports an on/off control of the light means 3 or not. If not, the flash device enters mode B (flash device flash control mode). If yes, the flash device enters mode C (mobile equipment flash control mode).

In mode B, when the light means 3 is off (state 23), a double click constantly switches the light on (state 24). Another double click switches the light means 3 off again. A single click on the input means 4 either from the off state 23 or the on state 24, switches the light means 3 on or maintains the on state (state 25) and at the same time initiates a light adjustment delay (cf. step 23 in Fig. 4). After the delay is expired, the camera function instruction is sent to the mobile terminal 2 (cf. step S24 in Fig. 4). Then, the flash device 1 goes into the wait for response state 26. Hereby, the flash device 1 waits for a response from the mobile terminal that the light sensitivity has been adjusted. It is to be noted that this wait for response state 26 should only be entered once. The second time the flash device 1 is used, the delay expired and single click events shall go directly to the image integration delay state 27, in which the light means 3 is maintained in the on state for a certain time period (cf. step S26 in Fig. 4). This is done in order to avoid confusing mode switches when by accident a not OK is returned from the mobile terminal in response to the camera function instruction (cf. step S24 in Fig. 4). After the image integration delay has expired, the flash device 1 goes into the off state 23 again.

In mode C, a double click on the input means 4 switches the light means 3 from an off state 28 into an on state 29 and vice versa. In case of a single click on the input means 4, a camera function instruction is sent to the mobile terminal 2 (steps S8 and S9 in Fig. 3). In response to a corresponding instruction from the mobile terminal 2 (cf. steps S12 and S13 in Fig. 3), the light means 3 is switched on (state 30). Then, after receiving an off signal from the mobile terminal (cf. steps S16 and S17 in Fig. 3), the light means 3 is switched off again (state 28).

Generally, if the mobile terminal 2 supports a corresponding functionality, the flash device can also be controlled by the camera push button 5 instead of the input means 4. The button 5 can have the same function as described above for the input means 4.

It is to be noted that the specific exchange of instructions and information as described in relation to Figs. 3, 4 and 5 can be changed and altered depending on the specific required applications.

## Claims

1. Portable flash device (1) as accessory to a mobile communication equipment (2) for a wireless communication system comprising a camera function, with input means (4) for inputting flash and camera instructions by a user,
light means (3) for outputting light,
control means (10) for controlling the camera function of a connected mobile communication equipment on the basis of a camera instruction input via the input means and for controlling a flash light function of the light means supporting the camera function.

2. Portable flash device according to claim 1,
**characterized in,**
**that** the control means (10) controls the flash light function of the light means for supporting the camera function of a connected mobile communication equipment on the basis of control signals received from a connected mobile communication equipment in a mobile equipment flash control mode or on the basis of control signals generated in the control means in a flash device flash control mode.

3. Portable flash device according to claim 2,
**characterized in,**
**that** when the flash device (1) is connected to a mobile communication equipment, the control means is set to the mobile equipment or flash device control mode depending on a corresponding instruction received from the connected mobile communication equipment.

4. Portable flash device according to claim 2 or 3,
**characterized in,**
**that** the control means (10), in the mobile equipment flash control mode, activates or deactivates the flash light function of the light means upon the receipt of corresponding instruction from the mobile communication equipment.

5. Portable flash device according to claim 4,
**characterized in,**
**that** the control means (10), in the mobile equipment flash control mode, upon receiving a camera and flash instruction input via the input means by a user, sends a camera instruction to the mobile equipment and, upon receiving a flash on instruction from the mobile communication equipment, activates the flash light function of the light means and, upon receiving a flash off instruction from the mobile communication equipment, deactivates the flash light function of the light means.

6. Portable flash device according to one of the claims 1 to 5,
**characterized in,**
**that** the control means (10), in the flash device flash control mode, activates or deactivates the flash light function of the light means on the basis of a delay time period.

7. Portable flash device according to claim 6,
**characterized in,**
**that** the control means (10), in the flash device flash control mode, upon receiving a camera and flash instruction input via the input means by a user, sends a camera instruction to the mobile communication equipment and generates said delay time period.

8. Portable flash device according to one of the claims 1 to 7,
**characterized in,**
**that** the control means (10), in a view finder mode, turns said light means on before a picture is taken.

9. Portable flash device according to one of the claims 1 to 8,
**characterized in,**
**that** the light means (3) comprises one or more light emitting diodes.

10. Portable flash device according to one of the claims 1 to 9,
**characterized in,**
**that** the input means (4) is an input button with a one click and double click function so that the input of different instructions is enabled.

11. Portable flash device according to one of the claims 1 to 9,
**characterized in,**
**that** the input means (4) is an input button with a two-step functionality.
